# EUROPEAN PATENT APPLICATION

(11) **EP 4 672 056 A1**
(43) Date of publication of application: **31.12.2025**
(21) Application number: 25186053.2
(22) Date of filing: 27.06.2025
(51) Int. Cl.: G06F 21/55, H04L 9/40

(54) **ACTIVE THREAT RESPONSE WITH HOST ISOLATION**

(30) Priority: 28.06.2024 US 202418757996
(71) Applicant: Sophos Limited, Abingdon, Oxfordshire OX14 3YP (GB)
(72) Inventor: WALA, Avni Bhupendrakumar, Bangalore (IN); BATHINENI, Sowri Raju, Bengaluru (IN); KHAN, Nourin, Indore (IN); DAS, Dipak Kr, Bangalore (IN); G, Rohith N, Bangalore (IN); K, Kartikeya, Bangalore (IN); THOMAS, Andrew J, Long Wittenham (GB); ANDREWS, Robert Paul, Texas (US)
(74) Representative: Black, Diego

(57) **Abstract**

A method for responding to a threat with host isolation includes receiving, by one or more processors of a threat management computer system, endpoint health information for a plurality of endpoints of a monitored network system managed by the threat management computer system, identifying a threat associated with the monitored network system, identifying a known device identifier or user identification associated with an endpoint of the plurality of endpoints that is responsible for the threat and propagating a global isolation of the endpoint across network devices of the monitored network system. The global isolation is configured to block the device identifier or user identification associated with the endpoint that is responsible for the threat.

## Description

### REFERENCE TO RELATED APPLICATIONS

This application claims priority of US patent application number 18/757,996 filed on 28 June 2024.

### FIELD

The present disclosure relates generally to active threat response methods and systems. More specifically, this disclosure relates to endpoint or host isolation across network devices informed by threat intelligence sources.

### BACKGROUND

When a host or endpoint is flagged as a threat within a network, a significant challenge is faced by network administrators to promptly disseminate this information to all wired and wireless network devices and enact measures to restrict network access for the identified threat. Presently, if an administrator desires to block an endpoint or host across various products and/or network devices, the administrator must reach out to these products and/or network devices individually. For example, to block a device on a switch, an administrator would access the switches administration software to add the device to a blacklist on the switch. This step must be taken across all switches on a network.

As such, systems and methods for automatic endpoint or host isolation globally across network devices, would be well received in the art.

### SUMMARY

According to embodiments described herein, a method, and associated computer system and computer program product for responding to a threat with host isolation is provided. According to the method, one or more processors of a threat management computer system receive endpoint health information for a plurality of endpoints of a monitored network system managed by the threat management computer system. The one or more processors of the threat management computer system identify a threat associated with the monitored network system and identify a known device identifier or user identification associated with an endpoint of the plurality of endpoints that is responsible for the threat. Further, the one or more processors of the threat management computer system propagate a global isolation of the endpoint across network devices of the monitored network system. The global isolation is configured to block the device identifier or user identification associated with the endpoint that is responsible for the threat.

### BRIEF DESCRIPTION OF THE DRAWINGS

The above and further advantages of this disclosure may be better understood by referring to the following description in conjunction with the accompanying drawings, in which like reference numerals indicate like elements and features in the various figures. For clarity, not every element may be labeled in every figure. The drawings are not necessarily to scale, emphasis instead being placed upon illustrating the principles of the disclosure.
FIG. 1 depicts a block diagram of an environment for threat management, according to an example embodiment.
FIG. 2 depicts another block diagram of an environment for threat management, according to an example embodiment.
FIG. 3 depicts an architectural representation of a central management system of a threat management facility, according to an example embodiment.
FIG. 4 depicts an architectural representation of a switch, according to an example embodiment.
FIG. 5 depicts a sequence flow for retrieving a list of blocked MAC addresses, according to an example embodiment.
FIG. 6 depicts a sequence flow for monitoring a job status, according to an example embodiment.
FIG. 7A depicts a first portion of a sequence flow for blocking a MAC address, according to an example embodiment.
FIG. 7B depicts a second portion of the sequence flow for blocking a MAC address of FIG. 7A, according to an example embodiment.
FIG. 8A depicts a first portion of a sequence flow for unblocking a MAC address, according to an example embodiment.
FIG. 8B depicts a second portion of the sequence flow for unblocking a MAC address of FIG. 8A, according to an example embodiment.
FIG. 9 depicts a method of enhanced cloud-based active threat response, according to an example embodiment.
FIG. 10 depicts a method of enhanced cloud-based active threat response, according to an example embodiment.
FIG. 11 depicts a diagram of an example computing device, according to an example embodiment.

### DETAILED DESCRIPTION

Reference in the specification to "one embodiment" or "an embodiment" means that a particular, feature, structure or characteristic described in connection with the embodiment is included in at least one embodiment of the teaching. References to a particular embodiment within the specification do not necessarily all refer to the same embodiment.

The present teaching will now be described in more detail with reference to exemplary embodiments thereof as shown in the accompanying drawings. While the present teaching is described in conjunction with various embodiments and examples, it is not intended that the present teaching be limited to such embodiments. On the contrary, the present teaching encompasses various alternatives, modifications and equivalents, as will be appreciated by those of skill in the art. Those of ordinary skill having access to the teaching herein will recognize additional implementations, modifications and embodiments, as well as other fields of use, which are within the scope of the present disclosure as described herein.

Recitation of ranges of values herein are not intended to be limiting, referring instead individually to any and all values falling within the range, unless otherwise indicated herein, and each separate value within such a range is incorporated into the specification as if it were individually recited herein. The words "about," "approximately" or the like, when accompanying a numerical value, are to be construed as indicating a deviation as would be appreciated by one of ordinary skill in the art to operate satisfactorily for an intended purpose. Similarly, words of approximation such as "approximately" or "substantially" when used in reference to physical characteristics, should be understood to contemplate a range of deviations that would be appreciated by one of ordinary skill in the art to operate satisfactorily for a corresponding use, function, purpose, or the like. Ranges of values and/or numeric values are provided herein as examples only, and do not constitute a limitation on the scope of the described embodiments. Where ranges of values are provided, they are also intended to include each value within the range as if set forth individually, unless expressly stated to the contrary. The use of any and all examples, or exemplary language ("e.g.," "such as," or the like) provided herein, is intended merely to better illuminate the embodiments and does not pose a limitation on the scope of the embodiments. No language in the specification should be construed as indicating any unclaimed element as essential to the practice of the embodiments.

In the following description, it is understood that terms such as "first," "second," "top," "bottom," "up," "down," and the like, are words of convenience and are not to be construed as limiting terms.

It should also be understood that endpoints, devices, compute instances or the like that are referred to as "within" an enterprise network may also be "associated with" the enterprise network, e.g., where such assets are outside an enterprise gateway but nonetheless managed by or in communication with a threat management facility or other centralized security platform for the enterprise network. Thus, any description referring to an asset within the enterprise network should be understood to contemplate a similar asset associated with the enterprise network regardless of location in a network environment unless a different meaning is explicitly provided or otherwise clear from the context.

Embodiments herein are directed to methods and computer systems configured to respond to a threat in the cyber security context with endpoint (i.e. host, device and/or user) isolation. As contemplated herein, computers, and their central management system, upon detecting or otherwise receiving information indicating a threat to an endpoint, may perform a global isolation of the endpoint across various network devices and/or products within the network to block a device identifier or user identification associated with the endpoint that is responsible for the threat.

The present disclosure endeavors to bridge the gap for prompt dissemination of information related to a known or potential threat to all wired or wireless network devices and/or products within a network system in order to enact measures to restrict network access for the endpoint associated with the identified threat. Embodiments described herein leverage a cloud-based control plane to consolidate threat intelligence from diverse network devices. Solutions provided herein advantageously provide actionable alerts to network administrators to order to autonomously and automatically execute commands across all wired and wireless network devices to isolate the threatening endpoint. This may, for example, include restricting all network communications to and from the threatening endpoint in order to protect the rest of the network. Solutions provided herein further advantageously provide a consolidated view of all identified threats and actions taken to isolate the threat.

At a high level, methods include receiving endpoint health and/or state information by a threat management computer system, which may be a cloud-based system. This information may be automatically scanned by the threat management computer system to identify threats to endpoints. Based on the severity of the threat, the threat management computer system may generate automatic or manual alerts and trigger isolation actions globally across various network devices to protect the network from the threat.

In overview, the present invention may be configured to perform various stages of operation. In an exemplary embodiment, the concepts herein may be implemented in several stages. For example, at a first stage, a managed detection and response system receives information or intelligence indicative of a potential threat. This may include receiving endpoint health information and automatically scanning the information received to identify threats. Based on the severity of the threat identified, the managed detection and response system may determine that an alert or isolation action is appropriate. Next, the managed detection and response system triggers the action at a central (e.g., cloud based) threat management facility or system via APIs. The threat management facility or system then communicates with network devices within the monitored network. At a final stage, action is implemented on the monitored network to isolate the threat including blocking MAC addresses, for example.

The present disclosure contemplates various potential isolation actions being triggered automatically. Exemplary actions contemplated herein include, for example, that identity of the endpoint may be added to a "quarantine network" on access switches where the endpoint has very restricted network and/or internet access; the identity of the endpoint may be added to a "black list" on access switches where the endpoint has no network and/or internet access; the identity of the endpoint may be added to a "walled garden list" on wireless access points where the endpoint has network and/or internet access to only specific websites or IP addresses; and/or the identity of the endpoint may be added to a "black list" on wireless access points where the endpoint has no network and/or internet access.

Advantageously, embodiments disclosed herein keep all network devices such as switches and/or wireless access points up-to-date with information related to identified threats from endpoints. Further, embodiments disclosed herein advantageously eliminate the need for manual intervention by network administrators to isolate "bad" endpoints on individual network devices such as switches and/or wireless access points.

Embodiments described herein may be deployed by a central threat management facility or system which can facilitate in deploying, monitoring and/or assisting a customer or other network of computers in threat detection, and further may facilitate in responding to a threat with host or endpoint isolation. The threat management facility may be a central cloud-based facility in communication with a client, customer or monitored network system or computing environment. In various embodiments, the threat management facility may further be connected to a data lake which stores information related to the client, customer or monitored network system or computing environment.

Furthermore, while embodiments described herein provide for blocking of endpoints through device identifiers (such as MAC addresses), in other embodiments it is contemplated that any user identifiers may be used to globally block an endpoint or host. Further, while a MAC address is associated with a device, the principles described herein may be used to block a user identity across all known user devices (i.e. more than one device).

Moreover, the principles described herein are particularly described using exemplary network devices such as switches and Wi-Fi access points. However, it is further contemplated that a network device may be a zero trust network access (ZTNA) system, a firewall, or the like. Various forms of networks and network devices may be in communication with a threat management computer system for the host and/or endpoint blocking described herein.

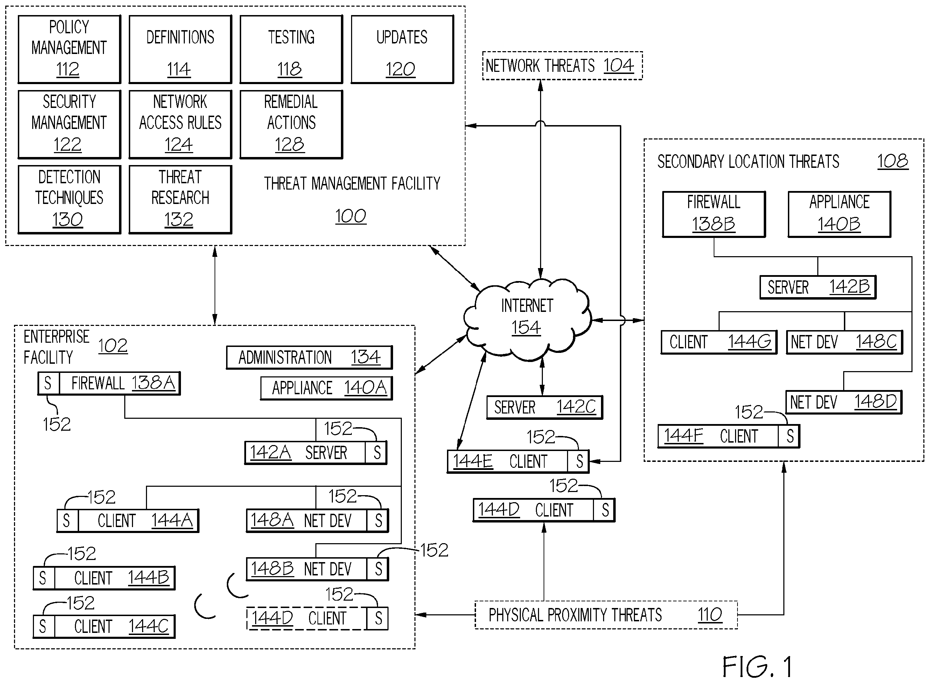

FIG. 1 illustrates an environment for threat management, according to an example embodiment. Specifically, FIG. 1 depicts a block diagram of a threat management facility 100 providing protection to one or more enterprises, networks, locations, users, businesses, etc. against a variety of threats-a context in which the techniques described herein may usefully be deployed. The threat management facility 100 may represent any the threat management system, such as the threat management systems described herein below.

The threat management facility 100 may be used to protect devices and assets (e.g., IoT devices or other devices) from computer-generated and human-generated threats. For example, a corporation, school, web site, homeowner, network administrator, or other entity may institute and enforce one or more policies that control or prevents certain network users (e.g., employees, residents, users, guests, etc.) from accessing certain types of applications, devices, resources generally or in a particular manner. Policies may be created, deployed and managed, for example, through the threat management facility 100, which may update and monitor network devices, users, and assets accordingly.

The threat of enumeration attacks, malware or other compromises may be present at various points within a network 102 such as laptops, desktops, servers, gateways, communication ports, handheld or mobile devices, IoT devices, firewalls. In addition to controlling or stopping malicious code, a threat management facility 100 may provide policy management to control devices, applications, or users that might otherwise undermine productivity and network performance within the network 102.

The threat management facility 100 may provide protection to network 102 from computer-based malware, including viruses, spyware, adware, Trojans, intrusion, spam, policy abuse, advanced persistent threats, uncontrolled access, and the like. In general, the network 102 may be any networked computer-based infrastructure or the like managed by a threat management facility 100, such as an organization, association, institution, or the like, or a cloud-based facility that is available for subscription by individuals. For example, the network 102 may be a corporate, commercial, educational, governmental, or other network 102, and may include multiple networks, computing resources, and other facilities, may be distributed among more than one geographical location, and may include administration 134, a firewall 138A, an appliance 140A, a server 142A, network devices 148A-B, clients 144A-D, such as IoT devices or other devices. It will be understood that any reference herein to a client or client facilities may include the clients 144A-D shown in FIG. 1 and vice versa.

The threat management facility 100 may include computers, software, or other computing facilities supporting a plurality of functions, such as security management facility 122, policy management facility 112, update facility 120, a definitions facility 114, network access rules facility 124, remedial action facility 128, detection techniques facility 130, testing facility 118, a threat research facility 132, and the like. In embodiments, the threat protection provided by the threat management facility 100 may extend beyond the network boundaries of the network 102 to include clients 144D (or client facilities) that have moved into network connectivity not directly associated with or controlled by the network 102. Threats to client facilities may come from a variety of sources, such as from network threats 104, physical proximity threats 110, secondary location threats 108, and the like. Clients 144A-D may be protected from threats even when the client 144A-D is not directly connected or in association with the network 102, such as when a client 144E-F moves in and out of the network 102, for example when interfacing with an unprotected server 142C through the Internet 154, when a client 144F is moving into a secondary location threat 108 network such as interfacing with components 140B, 142B, 148C, 148D that are not protected, and the like.

The threat management facility 100 may use or may be included in an integrated system approach to provide network 102 protection from a plurality of threats to device resources in a plurality of locations and network configurations. The threat management facility 100 may also or instead be deployed as a stand-alone solution. For example, some or all of the threat management facility 100 components may be integrated into a server or servers at a remote location, for example in a cloud computing facility. For example, some or all of the threat management facility 100 components may be integrated into a firewall, gateway, or access point within or at the border of the network 102. In some embodiments, the threat management facility 100 may be integrated into a product, such as a third-party product, e.g., through an application programming interface, which may be deployed on endpoints, on remote servers, on internal servers or gateways for a network, or some combination of these.

The security management facility 122 may include a plurality of elements that provide protection from malware to network 102 device resources in a variety of ways including endpoint security and control, email security and control, web security and control, reputation-based filtering, control of unauthorized users, control of guest and non-compliant computers, and the like. The security management facility 122 may include a local software application that provides protection to one or more network 10 devices. The security management facility 122 may have the ability to scan client facility files for malicious code, remove or quarantine certain applications and files, prevent certain actions, perform remedial actions and perform other security measures. This may include scanning some or all of the files stored on the client facility or accessed by the client facility on a periodic basis, scanning an application when the application is executed, scanning data (e.g., files or other communication) in transit to or from a device, etc. The scanning of applications and files may be performed to detect known or unknown malicious code or unwanted applications.

The security management facility 122 may provide email security and control. The security management facility 122 may also or instead provide for web security and control, such as by helping to detect or block viruses, spyware, malware, unwanted applications, and the like, or by helping to control web browsing activity originating from client devices. In an embodiment, the security management facility 122 may provide for network access control, which may provide control over network connections. In addition, network access control may control access to virtual private networks (VPN) that provide communications networks tunneled through other networks. The security management facility 122 may provide host intrusion prevention through behavioral based protection, which may guard against known or unknown threats by analyzing behavior before or while code executes. The security management facility 122 may provide reputation filtering, which may target or identify sources of code.

In general, the security management facility 122 may support overall security of the network 102 using the various techniques described above, optionally as supplemented by updates of malicious code information and so forth for distribution across the network 102.

The administration facility 134 may provide control over the security management facility 122 when updates are performed. Information from the security management facility 122 may also be sent from the enterprise back to a third party, a vendor, or the like, which may lead to improved performance of the threat management facility 100.

The threat management facility 100 may include a policy management facility 112 configured to take actions, such as to block applications, users, communications, devices, and so on based on determinations made. The policy management facility 112 may employ a set of rules or policies that determine network 102 access permissions for a client 144. In an embodiment, a policy database may include a block list, a blacklist, an allowed list, a whitelist, or the like, or combinations of the foregoing, that may provide a list of resources internal or external to the network 102 that may or may not be accessed by client devices 144. The policy management facility 112 may also or instead include rulebased filtering of access requests or resource requests, or other suitable techniques for controlling access to resources consistent with a corresponding policy.

The policy management facility 112 may also provide configuration policies to be used to compare and control the configuration of applications, operating systems, hardware, devices, network associated with the network 102. An evolving threat environment may dictate timely updates, and thus an update management facility 120 may also be provided by the threat management facility 100. In addition, a policy management facility 112 may require update management (e.g., as provided by the update facility 120 herein described). In embodiments, the update management facility 120 may provide for patch management or other software updating, version control, and so forth.

The security facility 122 and policy management facility 112 may push information to the network 102 and/or a given client 144. The network 102 and/or client 144 may also or instead request information from the security facility 122 and/or policy management facility 112, network server facilities 142, or there may be a combination of pushing and pulling of information. In an embodiment, the policy management facility 112 and the security facility 122 management update modules may work in concert to provide information to the network 102 and/or client 144 facility for control of applications, devices, users, and so on.

As threats are identified and characterized, the threat management facility 100 may create updates that may be used to allow the threat management facility 100 to detect and remediate malicious software, unwanted applications, configuration and policy changes, and the like. The threat definition facility 114 may contain threat identification updates, also referred to as definition files. A definition file may be a virus identity file that may include definitions of known or potential malicious code. The virus identity definition files may provide information that may identify malicious code within files, applications, or the like. The definition files may be accessed by security management facility 122 when scanning files or applications within the client facility for the determination of malicious code that may be within the file or application. A definition management facility may include a definition for a neural network or other recognition engine. A definition management facility 114 may provide timely updates of definition files information to the network, client facilities, and the like.

The security management facility 122 may be used to scan an outgoing file and verify that the outgoing file is permitted to be transmitted per the enterprise facility 102 rules and policies. By checking outgoing files, the security management facility 122 may be able to discover malicious code infected files that were not detected as incoming files.

The threat management facility 100 may provide controlled access to the network 102. A network access rules facility 124 may be responsible for determining if a client facility 144 application should be granted access to a requested network resource. In an embodiment, the network access rules facility 124 may verify access rights for client facilities 144 to or from the network 102 or may verify access rights of computer facilities to or from external networks. When network access for a client facility is denied, the network access rules facility 124 may send an information file to the client facility, e.g., a command or command file that the remedial action facility 128 may access and take action upon. The network access rules facility 124 may include one or more databases that may include a block list, a blacklist, an allowed list, a white list, a reputation list, an unacceptable network resource database, an acceptable network resource database, a network resource reputation database, or the like. The network access rules facility 124 may incorporate rule evaluation. Rule evaluation may, for example, parse network access requests and apply the parsed information to network access rules. The network access rule facility 124 may also or instead provide updated rules and policies to the enterprise facility 102.

When a threat or policy violation is detected by the threat management facility 100, the threat management facility 100 may perform or initiate remedial action through a remedial action facility 128. Remedial action may take a variety of forms, such as terminating or modifying an ongoing process or interaction, issuing an alert, sending a warning to a client or administration facility 134 of an ongoing process or interaction, executing a program or application to remediate against a threat or violation, record interactions for subsequent evaluation, and so forth. The remedial action may include one or more of blocking some or all requests to a network location or resource, performing a malicious code scan on a device or application, performing a malicious code scan on the client facility 144, quarantining a related application (or files, processes or the like), terminating the application or device, isolating the application or device, moving a process or application code to a sandbox for evaluation, isolating the client facility 144 to a location or status within the network that restricts network access, blocking a network access port from a client facility 144, reporting the application to an administration facility 134, or the like, as well as any combination of the foregoing.

Remedial action may be provided as a result of a detection of a threat or violation. The detection techniques facility 130 may include tools for monitoring the network or managed devices within the network 102. The detection techniques facility 130 may provide functions such as monitoring activity and stored files on computing facilities. Detection techniques, such as scanning a computer's stored files, may provide the capability of checking files for stored threats, either in the active or passive state. Detection techniques such as streaming file management may be used to check files received at the network, a gateway facility, a client facility, and the like.

Verifying that the threat management facility 100 detects threats and violations to established policy, may require the ability to test the system, either at the system level or for a particular computing component. The testing facility 118 may allow the administration facility 134 to coordinate the testing of the security configurations of client facility computing facilities on a network. For example, the administration facility 134 may be able to send test files to a set of client facility computing facilities to test the ability of the client facility to determine acceptability of the test file. After the test file has been transmitted, a recording facility may record the actions taken by the client facility in reaction to the test file. The recording facility may aggregate the testing information from the client facility and report the testing information to the administration facility 134. The administration facility 134 may be able to determine the level of preparedness of the client facility 144 based on the reported information. Remedial action may be taken for any of the client facilities 144 as determined by the administration facility 134.

The threat management facility 100 may provide threat protection across the network 102 to devices such as clients 144, a server facility 142, an administration facility 134, a firewall 138, a gateway, one or more network devices (e.g., hubs and routers 148, a threat management or other appliance 140, any number of desktop or mobile users, and the like. As used herein the term endpoint may refer to any compute instance running on a device that can source data, receive data, evaluate data, buffer data, process data or the like (such as a user's desktop computer, laptop, IoT device, server, etc.). This may, for example, include any client devices as well as other network devices and the like within the network 102, such as a firewall or gateway (as a data evaluation endpoint computer system), a laptop (as a mobile endpoint computer), a tablet (as a hand-held endpoint computer), a mobile phone, or the like. The term endpoint may also or instead refer to any final or intermediate source or destination for data within a network 102. The endpoint computer security facility 152 may be an application locally loaded onto any corresponding computer platform or computer support component, either for local security functions or for management by the threat management facility 100 or other remote resource, or any combination of these.

The network 102 may include a plurality of client facility computing platforms on which the endpoint computer security facility 152 is installed. A client facility computing platform may be a computer system that is able to access a service on another computer, such as a server facility 142, via a network. The endpoint computer security facility 152 may, in corresponding fashion, provide security in any suitable context such as among a plurality of networked applications, for a client facility connecting to an application server facility 142, for a web browser client facility connecting to a web server facility 142, for an e-mail client facility retrieving e-mail from an Internet 154 service provider's mail storage servers 142 or web site, and the like, as well as any variations or combinations of the foregoing.

The network 102 may include one or more of a variety of server facilities 142, such as application servers, communications servers, file servers, database servers, proxy servers, mail servers, fax servers, game servers, web servers, and the like. A server facility 142, which may also be referred to as a server facility 142 application, server facility 142 operating system, server facility 142 computer, or the like, may be any device(s), application program(s), operating system(s), or combination of the foregoing that accepts client facility connections in order to service requests from clients 144. In embodiments, the threat management facility 100 may provide threat protection to server facilities 142 within the network 102 as load conditions and application changes are made.

A server facility 142 may include an appliance facility 140, where the appliance facility 140 provides specific services to other devices on the network. Simple server facility 142 appliances may also be utilized across the network 102 infrastructure, such as switches, routers, hubs, gateways, print servers, modems, and the like. These appliances may provide interconnection services within the network 102, and therefore may advance the spread of a threat if not properly protected.

A client facility 144 may be protected from threats from within the network 102 using a local or personal firewall, which may be a hardware firewall, software firewall, or combination, that controls network traffic to and from a client. The local firewall may permit or deny communications based on a security policy. Another component that may be protected by an endpoint computer security facility 152 is a network firewall facility 138, which may include hardware or software, in a standalone device or integrated with another network component, that may be configured to permit, deny, or proxy data through a network 102.

The interface between the threat management facility 100 and the network 102, and through the appliance facility 140 to embedded endpoint computer security facilities, may include a set of tools that may be the same or different for various implementations, and may allow each network administrator to implement custom controls. In embodiments, these controls may include both automatic actions and managed actions. The administration facility 134 may configure policy rules that determine interactions. The administration facility 134 may also establish license management, which in turn may further determine interactions associated with licensed applications. In embodiments, interactions between the threat management facility 100 and the network 102 may provide threat protection to the network 102 by managing the flow of network data into and out of the network 102 through automatic actions that may be configured by the threat management facility 100 for example by action or configuration of the administration facility 134.

Client facilities 144 within the network 102 may be connected to the network 102 by way of wired network facilities 148A or wireless network facilities 148B. Mobile wireless facility clients 144, because of their ability to connect to a wireless network access point, may connect to the Internet 154 outside the physical boundary of the network 102, and therefore outside the threat-protected environment of the network 102. Such a client 144, if not for the presence of a locally installed endpoint computer security facility 152, may be exposed to a malware attack or perform actions counter to network 102 policies. Thus, the endpoint computer security facility 152 may provide local protection against various threats and policy violations. The threat management facility 100 may also or instead be configured to protect the out-of-enterprise facility 102 mobile client facility (e.g., the clients 144) through interactions over the Internet 154 (or other network) with the locally installed endpoint computer security facility 152. Thus, mobile client facilities that are components of the network 102 but temporarily outside connectivity with the network 102 may be provided with the threat protection and policy control the same as or similar to client facilities 144 inside the network 102. In addition, mobile client facilities 144 may receive the same interactions to and from the threat management facility 100 as client facilities 144 inside the enterprise facility 102, such as by receiving the same or equivalent services via an embedded endpoint computer security facility 152.

Interactions between the threat management facility 100 and the components of the network 102, including mobile client facility extensions of the network 102, may ultimately be connected through the Internet 154 or any other network or combination of networks. Security-related or policyrelated downloads and upgrades to the network 102 may be passed from the threat management facility 100 through to components of the network 102 equipped with the endpoint computer security facility 152. In turn, the endpoint computer security facility 152 components of the enterprise facility or network 102 may upload policy and access requests back across the Internet 154 and through to the threat management facility 100. The Internet 154 however, is also the path through which threats may be transmitted from their source, and an endpoint computer security facility 152 may be configured to protect a device outside the network 102 through locally deployed protective measures and through suitable interactions with the threat management facility 100.

Thus, if the mobile client facility were to attempt to connect into an unprotected connection point, such as at a secondary location 108 that is not a part of the network 102, the mobile client facility 144 may be required to request network interactions through the threat management facility 100, where contacting the threat management facility 100 may be performed prior to any other network action. In embodiments, the client facility's 144 endpoint computer security facility 152 may manage actions in unprotected network environments such as when the client facility (e.g., client 144F) is in a secondary location 108, where the endpoint computer security facility 152 may dictate what applications, actions, resources, users, etc. are allowed, blocked, modified, or the like.

The secondary location 108 may have no endpoint computer security facilities 152 as a part of its components, such as its firewalls 138B, servers 142B, clients 144G, hubs and routers 148C-D, and the like. As a result, the components of the secondary location 108 may be open to threat attacks, and become potential sources of threats, as well as any mobile enterprise facility clients 144B-F that may be connected to the secondary location's 108 network. In this instance, these components may now unknowingly spread a threat to others connected to the network 102.

Some threats do not come directly from the Internet 154. For example, a physical proximity threat 110 may be deployed on a client device while that device is connected to an unprotected network connection outside the enterprise facility 102, and when the device is subsequently connected to a client 144 on the network 102, the device can deploy the malware or otherwise pose a threat. In embodiments, the endpoint computer security facility 152 may protect the network 102 against these types of physical proximity threats 110, for instance, through scanning any device prior to allowing data transfers, through security validation certificates, through establishing a safe zone within the network 102 to receive data for evaluation, and the like.

Having provided an overall context for threat detection, the description now turns to a brief discussion of embodiments of the present concept, followed by a description of systems and methods for active threat response including host or endpoint isolation.

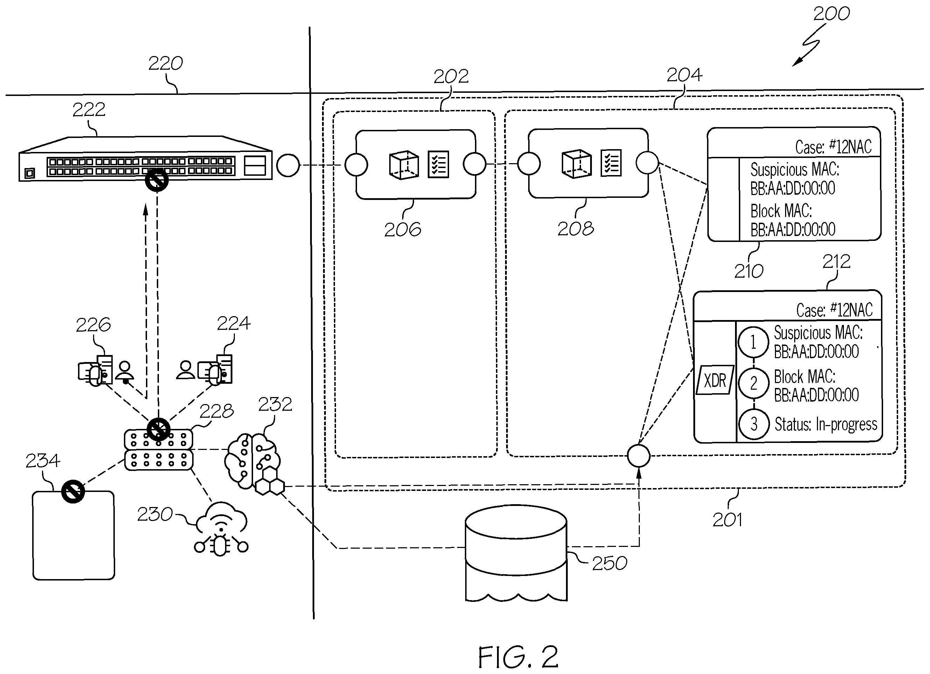

FIG. 2 depicts another block diagram of an environment 200 for threat management, according to an example embodiment. The environment 200 includes a threat management computer system 201 connected to a monitored network system 220 and a data lake 250. The threat management computer system 201 may be a cloud-based system that includes a managed detection and response (MDR) service 204 connected to a central management service 202. The central management service 202 may include a central micro-service application 206 in communication with an MDR service application 208 of the MDR service 204. The central micro-service application 206 may be an administrative platform used by an administrator of the monitored network system 220. Customers associated with the monitored network system 220 may have access to use the central micro-service application 206. The threat management computer system 201 may include any or all of the features of the threat management facility 100 described hereinabove.

The monitored network system 220 may be any client, customer or monitored network system or computing environment being managed by the threat management computer system 201 to prevent cybersecurity threats or the like (such as the enterprise facility 102 described herein above). The monitored network system 220 is shown including one or more switches 222, 228, one or more Wi-Fi access points 234. Various endpoints are shown including managed endpoints 226, unmanaged endpoints 224 and/or Internet of Things (IoT) devices 228 (e.g., printers, phones, televisions, industrial devices or the like) connected to the monitored network system 220 through the one or more switches 222, 228 and/or the Wi-Fi access points 234. The monitored network system 220 further includes a network detection and response (NDR) system 232 that is in communication with one or both of the data lake 250 and the MDR service 204 of the central management service 206.

The data lake 250 is configured to receive and store activity information associated with the plurality of endpoints 224, 226, 228 of the monitored network system 220. This information may be accumulated and/or provided by the NDR system 232. Anything that the endpoint senses (e.g. by a monitoring agent found locally at the endpoint) can be activity information provided and stored by the data lake 250, such as visiting a website, downloading a file, renaming a file, executing a file, deleting a file, changing a registry key, changing permissions, operating system events, or the like. Thus, the data lake 250 may be configured to receive and store any and all information associated with the monitored network system 220 related to network activity, including potential threat information. While not shown, the data lake 250 may be configured to receive and store activity information associated with any number of monitored network systems which are being monitored by the threat management computer system 201. In various embodiments, the data lake 250 may be any known database, including both structured and unstructured data, and may include one or both of an SQL database and/or a noSQL database.

The NDR service 232 located local to the monitored network system 220 may be in communication with the MDR service 204 located in the threat management computer system 201. Further, the MDR service 204 may be connected to the data lake 250 to receive or be provided information therefrom. For example, the MDR service 204 may read information off the data lake 250 both in real time and offline at scheduled times. The MDR service 204 is configured to facilitate the identifying the threat associated with the monitored network system 220 based on the activity information received and stored in the data lake 250 or provided directly from the NDR service 232. This detection may occur in real time. The MDR service 204 may include a software application 208 which includes an MDR interface 210 and may further include an extended detection and response (XDR) interface 212.

In accordance with methods described herein, endpoint or host health information can be received by the MDR service 204 and/or the NDR service 232 for a plurality of the endpoints 226 of the monitored network system 220. The MDR service 204 and/or the NDR service 232 identify suspicious behavior and may generate an alert that is observable and/or provided to an MDR analyst via one or both of the MDR interface 210 and the XDR interface 212. In some embodiments, the MDR analyst determines that the alerted information constitutes a threat from an endpoint or host device being monitored from the monitored network system 220. In other embodiments, this determination may be made automatically. Whatever the case, embodiments herein contemplate that a threat associated with the monitored network system is identified by the MDR service 204 and/or the threat management computer system 201. Further, the identified threat is determined to be a threat coming from an endpoint or host device or account. Thus, the MDR service 204 and/or the NDR service 232 may identify a known device identifier (such as a MAC address or the like), or user identification associated with the endpoint or host that is responsible for the threat.

Next propagation of a global isolation of the threatening endpoint across the various network devices 222, 228, 234 of the monitored network system 220 is conducted. This global isolation is configured to block the device identifier or user identification associated with the endpoint that is responsible for the threat. To accomplish this propagation, the MDR service application 208 may communicate with the central management service 206 via, for example, an asynchronous application programming interface (API). The central management service 206 may then communicate with the various network devices 222, 228, 234 of the monitored network system 220 through a blocking API, described herein below. After this blocking has been enforced, the host or endpoint responsible for the threat is isolated from the rest of the network and/or network devices and the switches 222, 228 and/or Wi-Fi access points 234 may actively block network traffic from the responsible host or endpoint.

This blocking may include various isolation actions such as, for example, that identity of the endpoint may be added to a "quarantine network" on switches the switches 222, 228 where the endpoint has very restricted network and/or internet access, or the identity of the endpoint may be added to a "black list" on the switches 222, 228, where the endpoint has no network and/or internet access. Regarding the Wi-Fi access points 234, the identity of the endpoint may be added to a "walled garden list" on the Wi-Fi access points 234 where the endpoint has network and/or internet access to only specific websites or IP addresses, and/or the identity of the endpoint may be added to a "black list" on the Wi-Fi access points 234 where the endpoint has no network and/or internet access.

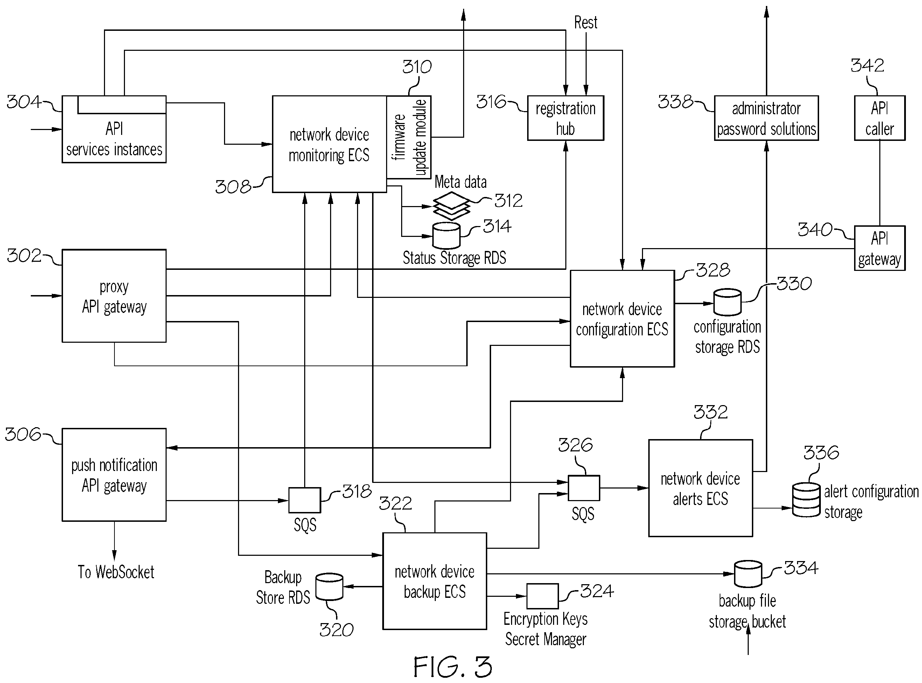

FIG. 3 depicts an architectural representation of a central management system 300 of a threat management facility, according to an example embodiment. The central management system 300 may represent, for example, the central management service 202 described and shown in FIG. 2. The central management service 300 may be in communication with switches and/or Wi-Fi access points, such as the switches 222, 228 and the Wi-Fi access points 234 shown in FIG. 2.

The central management service 300 includes a proxy API gateway 302 operably connected to an administrator user interface, one or more API services instances 304 operably connected to monitored network devices, a push notification API gateway 306, a network device monitoring elastic container service (ECS) 308 container orchestration service having a firmware update module 310 operably connected to an artifact repository manager, a registration hub 316 operably connected to monitored network devices, a network device configuration ECS 328, a network device backup ECS 322, and a network device ECS 332.

The network device monitoring elastic container service (ECS) 308 container orchestration service stores meta data 312 and status storage relational database service (RDS) 314 for storing registration information from the administrator user interface received from the API services instances 304. The push notification API gateway 306 is further in communication with the network device monitoring elastic container service (ECS) 308 container orchestration service through a simple queue service (SQS) 318. The network device monitoring elastic container service (ECS) 308 container orchestration service further communicates with the monitored network device during events described herein through the proxy API gateway 302.

The network device configuration ECS 328 is in communication with a configuration storage RDS 330. The network device configuration ECS 328 is provided information from both the proxy API gateway 302 and the network device backup ECS 322. An outside API gateway 340 and API caller 342 is further in communication with the network device configuration ECS 328.

The network device backup ECS 322 may be connected to a backup storage RDS 320, and an encryption keys secret manager system 324. Further, the network device backup ECS 322 communicates with a backup file storage bucket 334 which can receive backup information from network devices for upload and download. The network device backup ECS 322 further communicates backup information through a simple queue service (SQS) 326 to the network device alerts ECS 332. The network device alerts ECS 332 communicates with an alert configuration storage 336, as well as to a central alerts module of the threat management computer system through a local administrator password solutions system 338.

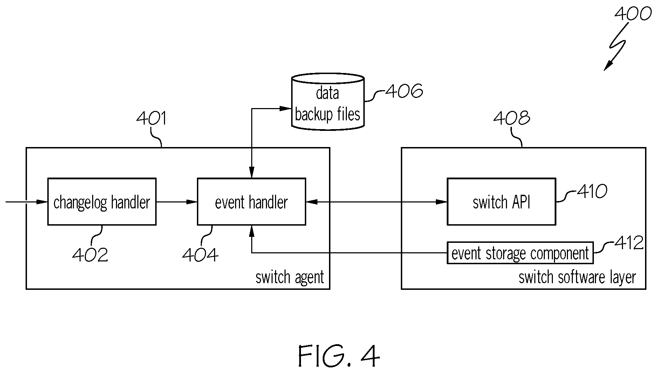

FIG. 4 depicts an architectural representation of a switch 400, according to an example embodiment. The switch 400 includes a switch agent 401 operating and installed thereon. The switch agent 401 may be a software agent that operates locally on the switch 400 and communicates and acts as an agent for a threat management computer system, such as the threat management computer system 200 and/or the central management system 200 thereof. The switch agent 401 includes a changelog handler 402 and an event handler 404 which communicates with data backup files 406. The switch agent 401 further communicates with a switch software layer 408 that includes a switch API 410 and an event storage component 412. While not shown, it should be understood that Wi-Fi access points may also include a software agent system communicating with the Wi-Fi access point systems for communicating and acting as an agent of a threat management computer system.

The switch 400 may offer functionality known as MAC filters for blocking MAC addresses. Such MAC filters may be subject to known constraints, such as that MAC addresses may be required to be blocked within the VLAN or across all VLANs associated with the switch. In the case that the network device is a Wi-Fi access point, such as a Wi-Fi6 access point, MAC filtering may also be offered. In this case, the list of MAC addresses to be blocked may be provided through an API which will be applied to all of the SSIDs and access points registered for that account. Newly created SSIDs and registered access points may inherit the block list created. Any configuration for blocking a MAC address done by a threat management computer system administrator may at later point will be merged which the global block list set by an MDR administrator.

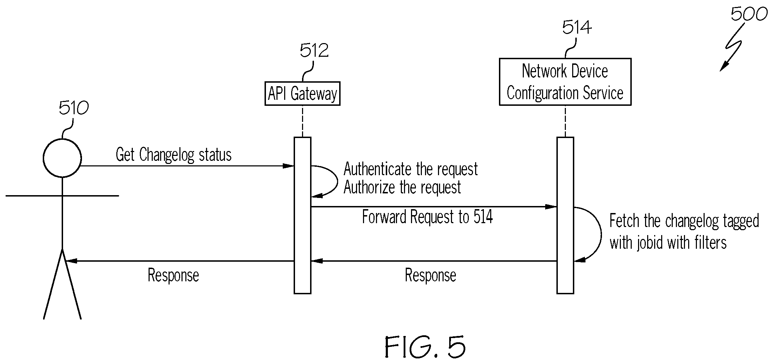

FIG. 5 depicts a sequence flow 500 for retrieving a list of blocked MAC addresses, according to an example embodiment. In a first step of the sequence flow an administrator 510 initiates a GET request through an API gateway 512 (such as the API gateway 340) to retrieve the list of MAC addresses blocked at the account level. The API gateway verifies the request's authenticity and provides authorization before forwarding it to the network device configuration service 514 (such as the network device configuration ECS 328). The network device configuration service 514 queries the Postgres to retrieve the blocked mac address list at the account level and then returns the mac address list in the response, indicating success or failure.

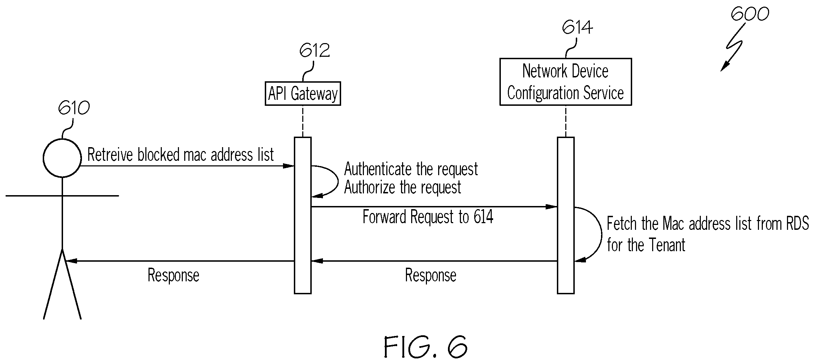

FIG. 6 depicts a sequence flow 600 for monitoring a job status, according to an example embodiment. In a first step of the sequence flow an administrator 610 initiates a GET request through an API gateway 612 (such as the API gateway 340) to get a job status of the blocking and/or unblocking of devices by MAC address. The API gateway verifies the request's authenticity and provides authorization before forwarding it to the network device configuration service 614 (such as the network device configuration ECS 328). The network device configuration service 614 queries the Postgres to retrieve the changelogs, and then returns the changelog status in the response, indicating success or failure.

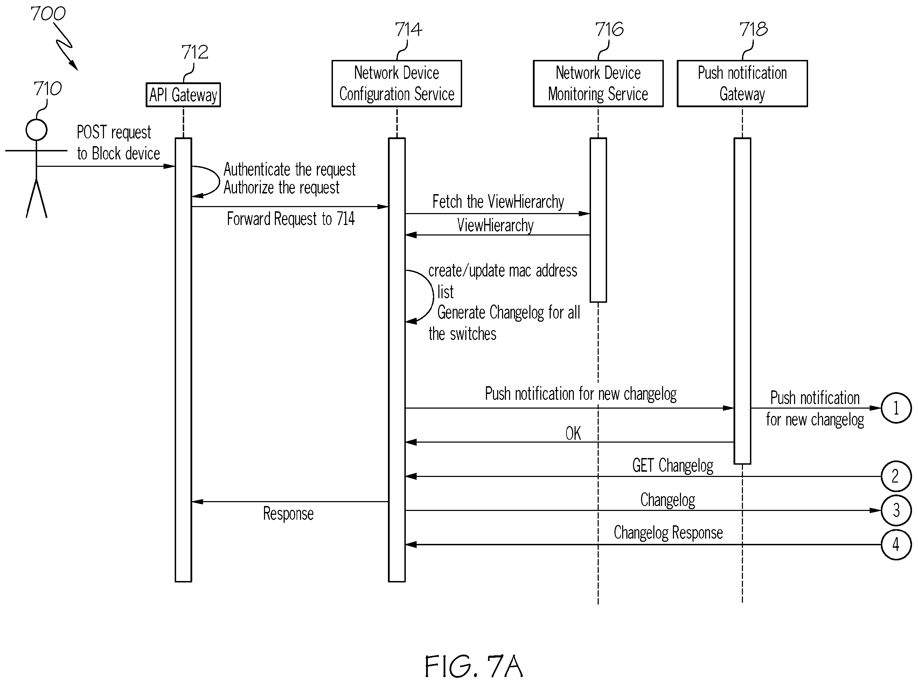

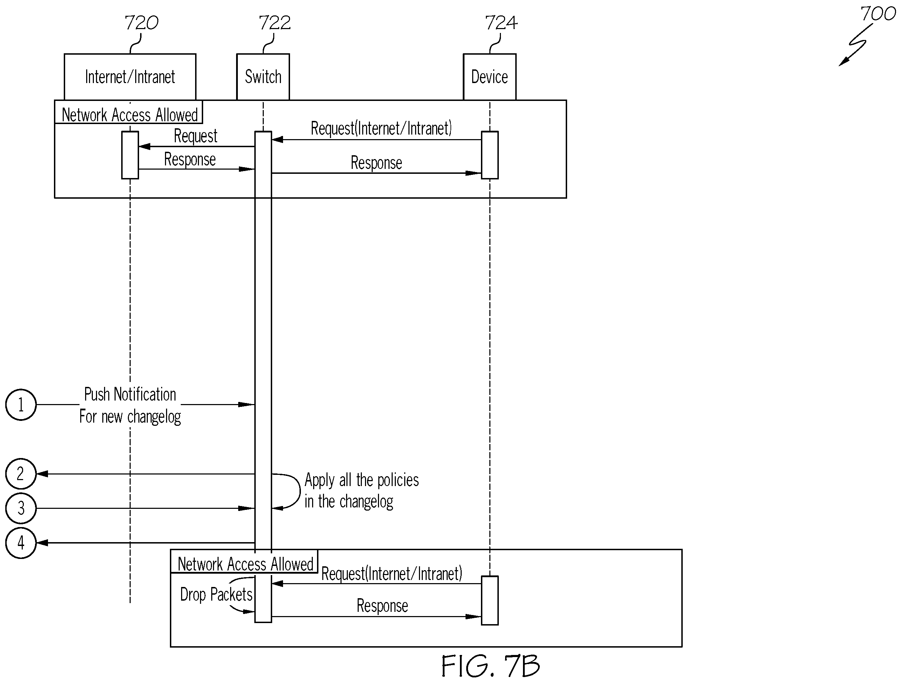

FIG. 7A depicts a first portion of a sequence flow for blocking a MAC address, according to an example embodiment. FIG. 7B depicts a second portion of the sequence flow for blocking a MAC address of FIG. 7A, according to an example embodiment. The first portion shown in FIG. 7A and the second portion shown in FIG. 7B are connected via numerical corresponding indicators 1, 2, 3 and 4.

In a first step of the sequence flow an administrator 710 initiates a POST request to a network device configuration service through an API gateway 714 to block a device, endpoint or host, by MAC address at an account level using switch and/or WiFi access point filters. The API gateway 714 verifies the request's authenticity and authorization before forwarding it to the network device configuration service 716.

The network device configuration service 716 performs the following tasks. The network device configuration service 716 queries the relational database service (such as the Status Store RDS 314) at the account level, then creates and/or replaces the blocked Mac address list at account level. The network device configuration service 716 generates the Changelog for all the network devices in asynchronous manner with reference to a jobId. The network device configuration service 716 generates a Delete Mac filter policy for mac addresses that are not in the new list, and generates a Mac filter policy for all the new mac addresses associated with a blocked endpoint, such as endpoint or device 724. The network device configuration service 716 sends a push notification through a push notification gateway 718 through the internet or intranet 720 to the network device or switch 722 for the new changelog. The network device 722 will then pull the changelog and apply the Mac filters to block the device 724 and report success/failure back to the network device configuration service 714. The network device 722 then returns success/failure along with the response which includes the jobId which will be used to verify the changelog status. The administrator 710 can then make a call to the network device configuration service 714 via the API gateway 712 using the jobId received to verify the status of whether the policy is applied on the network devices 722 successfully or not.

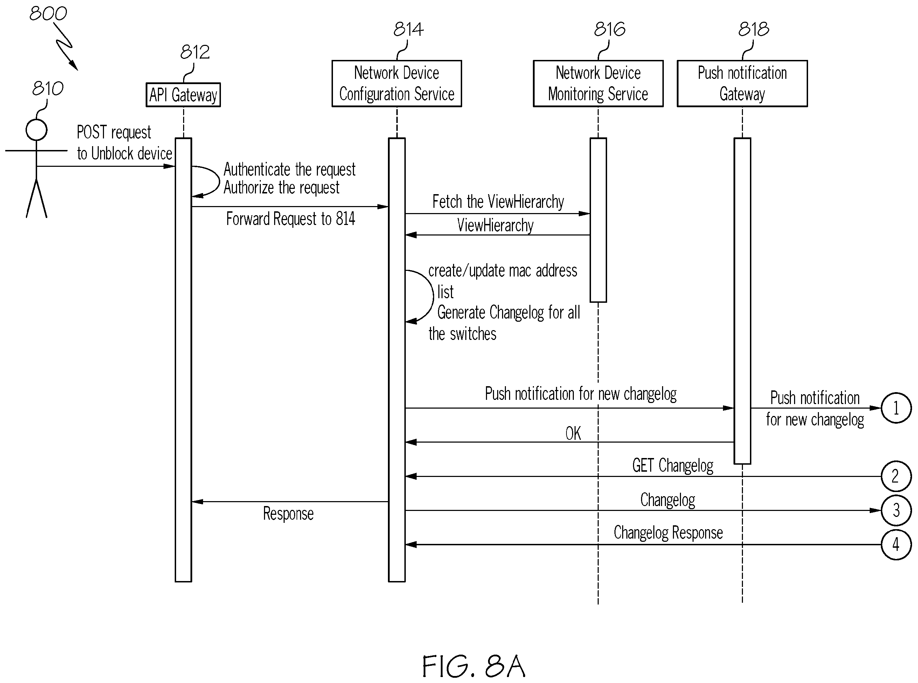

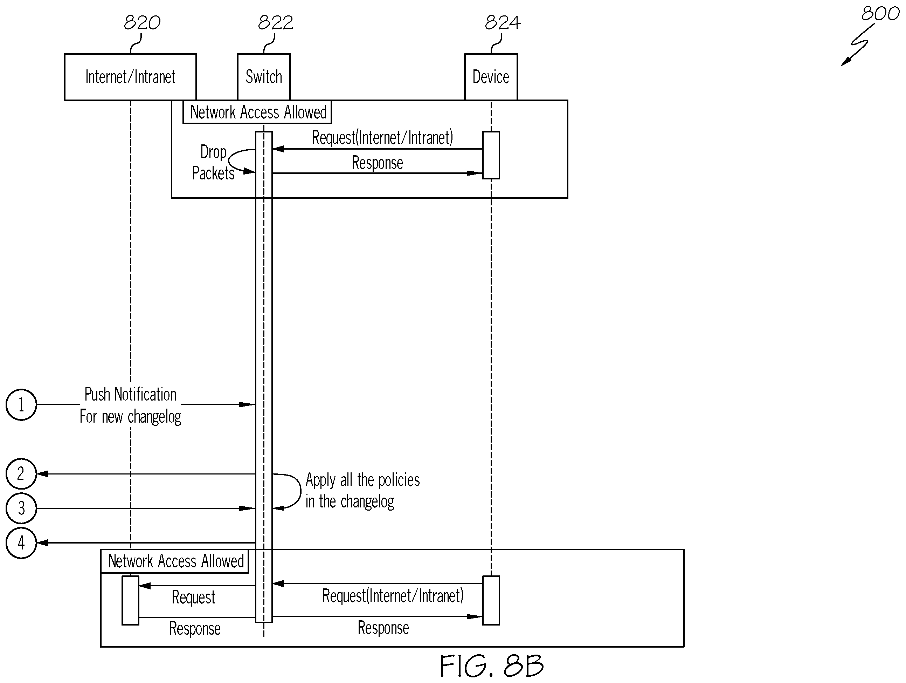

FIG. 8A depicts a first portion of a sequence flow for unblocking a MAC address, according to an example embodiment. FIG. 8B depicts a second portion of the sequence flow for unblocking a MAC address of FIG. 8A, according to an example embodiment. The first portion shown in FIG. 8A and the second portion shown in FIG. 8B are connected via numerical corresponding indicators 1, 2, 3 and 4.

In a first step of the sequence flow an administrator 810 initiates a POST request to a network device configuration service through an API gateway 814 to unblock a device, endpoint or host, by MAC address at an account level using switch and/or WiFi access point filters. The API gateway 814 verifies the request's authenticity and authorization before forwarding it to the network device configuration service 816.

The network device configuration service 816 performs the following tasks. The network device configuration service 816 queries the relational database service (such as the Status Store RDS 314) at the account level, then creates and/or replaces the blocked Mac address list at account level. The network device configuration service 816 generates the Changelog for all the network devices in asynchronous manner with reference to a jobId. The network device configuration service 816 generates a Delete Mac filter policy for mac addresses that are not in the new list, and generates a Mac filter policy for all the new mac addresses associated with a unblocked endpoint, such as endpoint or device 824. The network device configuration service 816 sends a push notification through a push notification gateway 818 through the internet or intranet 820 to the network device or switch 822 for the new changelog. The network device 822 will then pull the changelog and apply the Mac filters to unblock the device 824 and report success/failure back to the network device configuration service 814. The network device 822 then returns success/failure along with the response which includes the jobId which will be used to verify the changelog status. The administrator 810 can then make a call to the network device configuration service 814 via the API gateway 812 using the jobId received to verify the status of whether the policy is applied on the network devices 822 successfully or not.

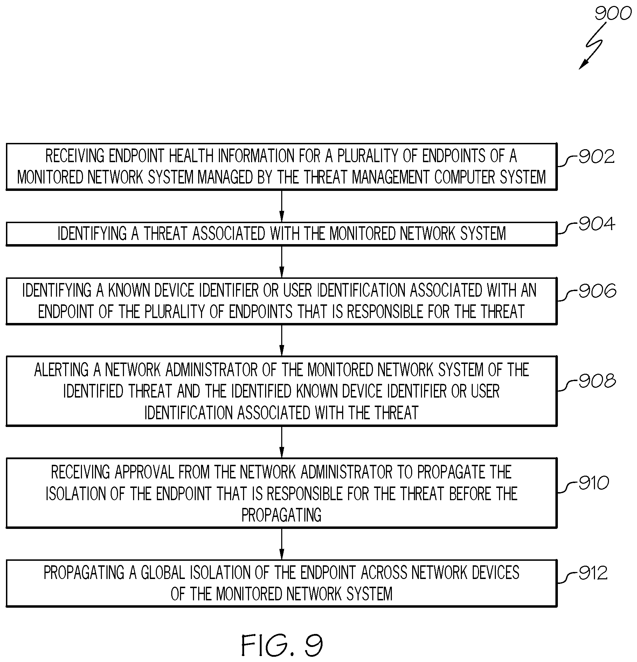

FIG. 9 depicts a method 900 of enhanced cloud-based active threat response, according to an example embodiment. The method 900 includes a step 902 of receiving endpoint health information for a plurality of endpoints, such as the endpoints 224, 226, 230, of a monitored network system, such as the monitored network systems 102, 220, managed by a threat management computer system, such as the threat management computer systems 100, 201, 300. The endpoint health information may be received by one or more computer processors of the threat management computer system. The method 900 includes a step 904 identifying, by the one or more processors of the threat management computer system, a threat associated with the monitored network system.

Further, the method 900 is shown including a step 906 of identifying, by the one or more processors of the threat management computer system, a known device identifier or user identification associated with an endpoint of the plurality of endpoints that is responsible for the threat. For example, the device identifier may include a MAC address, in some embodiments. However, in other embodiments, other device identifiers or user identifications are contemplated for identifying a host or endpoint.

The method 900 further includes a step 908 of alerting, by the one or more processors of the threat management computer system, a network administrator of the monitored network system of the identified threat and the identified known device identifier or user identification associated with the threat. Further, the method 900 includes a step 910 of receiving, by the one or more processors of the threat management computer system, approval from the network administrator to propagate the isolation of the endpoint that is responsible for the threat before the propagating. It should be understood that steps 908 and 910 may be optional steps, and in some embodiments, the propagating may occur automatically without a specific network administrator approval.

The method 900 further includes a step 912 propagating, by the one or more processors of the threat management computer system, a global isolation of the endpoint across network devices, such as the network devices 222, 228, 234, 400 of the monitored network system. This global isolation may configured to block the device identifier or user identification associated with the endpoint that is responsible for the threat. Blocking may include, for example, that identity of the endpoint may be added to a "quarantine network" on access switches where the endpoint has very restricted network and/or internet access; the identity of the endpoint may be added to a "black list" on access switches where the endpoint has no network and/or internet access; the identity of the endpoint may be added to a "walled garden list" on wireless access points where the endpoint has network and/or internet access to only specific websites or IP addresses; and/or the identity of the endpoint may be added to a "black list" on wireless access points where the endpoint has no network and/or internet access.

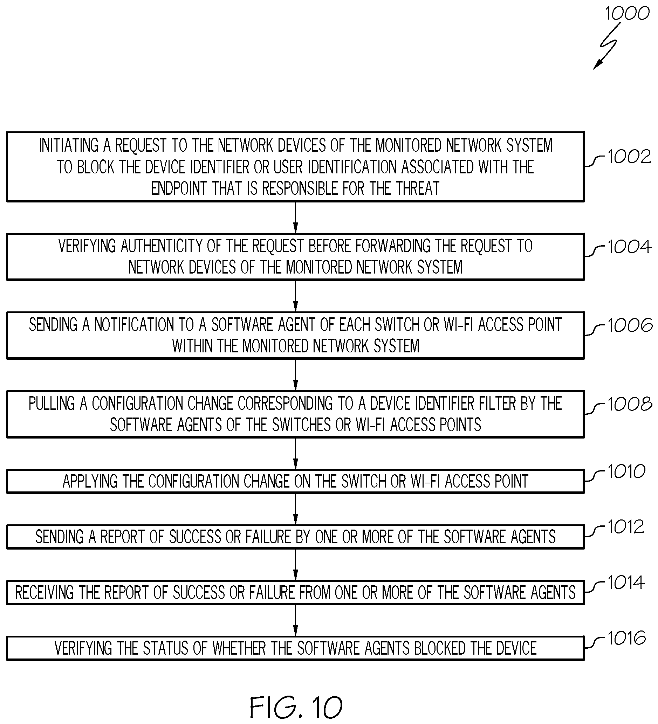

FIG. 10 depicts a method 1000 of enhanced cloud-based active threat response, according to an example embodiment. The method 1000 includes various steps which may be undertaken to propagate the global isolation described in the step 912 of the method 900. Thus, the method 1000 may be sub-steps that are included in the step 912 of the method 900.

The method 1000 includes a step 1002 of the propagation, which includes initiating, by the one or more processors of the threat management computer system, a request to the network devices of the monitored network system to block the device identifier or user identification associated with the endpoint that is responsible for the threat. The method 1000 includes a step 1004 of and verifying, by a gateway in communication with the threat management computer system, authenticity of the request before forwarding the request to network devices of the monitored network system.

The method 1000 includes a step 1006 of sending, by the one or more processors of the threat management computer system, a notification to a software agent, such as the switch agent 401, of each switch or Wi-Fi access point within the monitored network system. This notification may cause the software agents of the switches or Wi-Fi access points perform a next step 1008 of the method of pulling a configuration change corresponding to a device identifier filter and a further step 1010 of applying the configuration change on the switch or Wi-Fi access point.

The method 1000 then includes a step 1012 of receiving, by the one or more processors of the threat management computer system, a report of success or failure from one or more of the software agents and a step 1014 of verifying, by the one or more processors of the threat management computer system, the status of whether the software agents of each of the switches or access points within the monitored network system successfully applied the device identifier to block the device identifier.

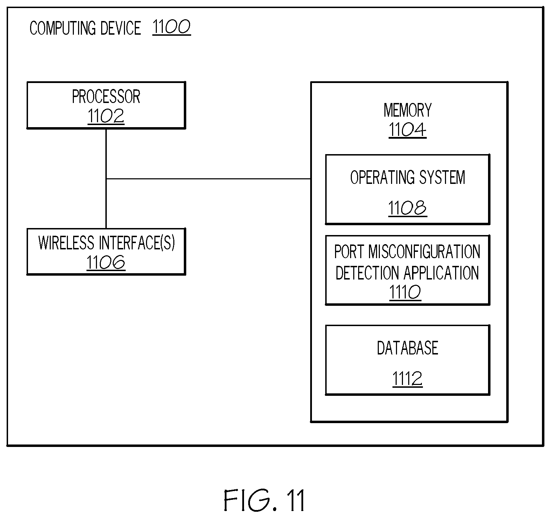

FIG. 11 is a diagram of an example computing device 1100, according to an example embodiment. As shown, the computing device 1100 includes one or more processors 1102, computer readable medium (e.g. a non-transitory computer readable medium) or memory 1104, I/O interface devices 1106 (e.g., wireless communications, etc.) and a network interface 1108. The computer readable medium 1104 may include an operating system 1108, running one or more software applications 1110 in accordance with the systems and methods described herein.

In operation, the processor 1102 may execute the application 1110 stored in the computer readable medium 1104. The application 1110 may include software instructions that, when executed by the processor, cause the processor to perform operations for responding to a threat with host isolation, as described and shown in FIGS. 2 - 10, with particular reference to the steps of the methodology shown in FIGS. 5- 10.

The application program 1110 may operate in conjunction with the data section 1112 and the operating system 1108. The device 1100 may communicate with other devices (e.g., a wireless access point) via the I/O interfaces 1106.

Accordingly, the foregoing systems and methods present technologically beneficial approach to addressing the problem of blocking a threatening endpoint or host across multiple various access points of a network. When a threat is detected, the present systems and methods recognize that time is of the essence. If an endpoint, such as a laptop computer, is threatening a monitored network system, this threat may be detected once by an MDR system and blocked across all access points, preventing the laptop from moving to another access point and connecting to the network (which would be allowed in the case that only the access point that the laptop is connected to is blocking the laptop). Thus, embodiments disclosed herein contemplate propagating a single command quickly across all network devices and access points to block one or more device identifiers or user identifications associated with a host or endpoint from those network devices and access points.

Furthermore, embodiments described herein allow for a single monitoring analyst, user or administrator to update a network configuration to block an endpoint globally across network devices of the monitored network system.

Although the foregoing Figures illustrate various embodiments of the disclosed systems and methods, additional and/or alternative embodiments are contemplated as falling within the scope of this disclosure. For example, in one embodiment, this disclosure provides for a method that includes

In another embodiment the method for responding to a threat with host isolation includes receiving, by one or more processors of a threat management computer system, endpoint health information for a plurality of endpoints of a monitored network system managed by the threat management computer system. The method includes identifying, by the one or more processors of the threat management computer system, a threat associated with the monitored network system. Still further, the method includes identifying, by the one or more processors of the threat management computer system, a known device identifier or user identification associated with an endpoint of the plurality of endpoints that is responsible for the threat. Moreover, the method includes propagating, by the one or more processors of the threat management computer system, a global isolation of the endpoint across network devices of the monitored network system. The global isolation is configured to block the device identifier or user identification associated with the endpoint that is responsible for the threat.

In a further embodiment, the method includes identifying, by the one or more processors of the threat management computer system, the known device identifier associated with the endpoint of the plurality of endpoints that is responsible for the threat, and propagating, by the one or more processors of the threat management computer system, the global isolation of the endpoint across network devices of the monitored network management system, wherein the global isolation is configured to block the device identifier associated with the endpoint that is responsible for the threat.

In yet another embodiment, the device identifier includes a media access control (MAC) address, and the propagating the global isolation of the endpoint across network devices of the monitored network system further includes: blocking, by the one or more processors of the threat management computer system, the device identifier by a MAC filter at a VLAN level, a LAN level and/or a port level of one or more switches of the monitored network system.

In yet a further embodiment, the propagating the global isolation of the endpoint across network devices of the monitored network system further includes: blocking, by the one or more processors of the threat management computer system, the device identifier at a service set identifier (SSID) level of one or more Wi-Fi access points of the monitored network system.

In another embodiment of the method, the propagating the global isolation of the endpoint across network devices of the monitored network management system further includes: sending, by the one or more processors of the threat management computer system, a notification to a software agent of each switch or Wi-Fi access point within the monitored network system, wherein the notification causes the software agents of the switches or Wi-Fi access points to pull a configuration change corresponding to a device identifier filter and apply the configuration change on the switch or Wi-Fi access point.

In a further embodiment, the propagating the global isolation of the endpoint across network devices of the monitored network management system further includes: receiving, by the one or more processors of the threat management computer system, a report of success or failure from one or more of the software agents.

In yet another embodiment, the propagating the global isolation of the endpoint across network devices of the monitored network management system further includes verifying, by the one or more processors of the threat management computer system, the status of whether the software agents of each of the switches or access points within the monitored network system successfully applied the device identifier to block the device identifier.

In yet a further embodiment, the method further includes alerting, by the one or more processors of the threat management computer system, a network administrator of the monitored network system of the identified threat and the identified known device identifier or user identification associated with the threat, and receiving, by the one or more processors of the threat management computer system, approval from the network administrator to propagate the isolation of the endpoint that is responsible for the threat before the propagating.

In another embodiment of the method, the one or more processors of the threat management computer system is a cloud-based system includes a managed detection and response (MDR) service in communication with a data lake, the data lake is configured to receive and store activity information associated with the plurality of endpoints of the monitored network system, and the MDR service is configured to facilitate the identifying the threat associated with the monitored network system based on the activity information received and stored in the data lake.

In another embodiment of the method, the propagating the global isolation of the endpoint across network devices of the monitored network system further includes initiating, by the one or more processors of the threat management computer system, a request to the network devices of the monitored network system to block the device identifier or user identification associated with the endpoint that is responsible for the threat; and verifying, by a gateway in communication with the threat management computer system, authenticity of the request before forwarding the request to network devices of the monitored network system.

In another embodiment, the disclosure provides for a threat management computer system that includes one or more computer processors, one or more computer readable storage media, and computer readable code stored collectively in the one or more computer readable storage media, with the computer readable code including data and instructions to cause the one or more computer processors to perform a method of responding to a threat with host isolation. The method includes receiving, by the one or more processors of the threat management computer system, endpoint health information for a plurality of endpoints of a monitored network system managed by the threat management computer system. The method includes identifying, by the one or more processors of the threat management computer system, a threat associated with the monitored network system. Still further, the method includes identifying, by the one or more processors of the threat management computer system, a known device identifier or user identification associated with an endpoint of the plurality of endpoints that is responsible for the threat. Moreover, the method includes propagating, by the one or more processors of the threat management computer system, a global isolation of the endpoint across network devices of the monitored network system. The global isolation is configured to block the device identifier or user identification associated with the endpoint that is responsible for the threat.

In another embodiment of the threat management computer system, the method includes identifying, by the one or more processors of the threat management computer system, the known device identifier associated with the endpoint of the plurality of endpoints that is responsible for the threat, and propagating, by the one or more processors of the threat management computer system, the global isolation of the endpoint across network devices of the monitored network management system, wherein the global isolation is configured to block the device identifier associated with the endpoint that is responsible for the threat.

In another embodiment of the threat management computer system, the device identifier includes a media access control (MAC) address, and the propagating the global isolation of the endpoint across network devices of the monitored network system further includes: blocking, by the one or more processors of the threat management computer system, the device identifier by a MAC filter at a VLAN level, a LAN level and/or a port level of one or more switches of the monitored network system.

In a further embodiment of the threat management computer system, the propagating the global isolation of the endpoint across network devices of the monitored network system further includes: blocking, by the one or more processors of the threat management computer system, the device identifier at a service set identifier (SSID) level of one or more Wi-Fi access points of the monitored network system.

In yet another embodiment of the threat management computer system, the propagating the global isolation of the endpoint across network devices of the monitored network management system further includes: sending, by the one or more processors of the threat management computer system, a notification to a software agent of each switch or Wi-Fi access point within the monitored network system, wherein the notification causes the software agents of the switches or Wi-Fi access points to pull a configuration change corresponding to a device identifier filter and apply the configuration change on the switch or Wi-Fi access point.

In yet another embodiment of the threat management computer system, the propagating the global isolation of the endpoint across network devices of the monitored network management system further includes: receiving, by the one or more processors of the threat management computer system, a report of success or failure from one or more of the software agents.

In yet another embodiment of the threat management computer system, the propagating the global isolation of the endpoint across network devices of the monitored network management system further includes verifying, by the one or more processors of the threat management computer system, the status of whether the software agents of each of the switches or access points within the monitored network system successfully applied the device identifier to block the device identifier.

In yet a further embodiment of the threat management computer system, the method further includes alerting, by the one or more processors of the threat management computer system, a network administrator of the monitored network system of the identified threat and the identified known device identifier or user identification associated with the threat, and receiving, by the one or more processors of the threat management computer system, approval from the network administrator to propagate the isolation of the endpoint that is responsible for the threat before the propagating.

In another embodiment of the threat management computer system, the one or more processors of the threat management computer system is a cloud-based system includes a managed detection and response (MDR) service in communication with a data lake, the data lake is configured to receive and store activity information associated with the plurality of endpoints of the monitored network system, and the MDR service is configured to facilitate the identifying the threat associated with the monitored network system based on the activity information received and stored in the data lake.

In another embodiment of the threat management computer system, the propagating the global isolation of the endpoint across network devices of the monitored network system further includes initiating, by the one or more processors of the threat management computer system, a request to the network devices of the monitored network system to block the device identifier or user identification associated with the endpoint that is responsible for the threat; and verifying, by a gateway in communication with the threat management computer system, authenticity of the request before forwarding the request to network devices of the monitored network system.

In another embodiment, the disclosure provides for a computer program product that includes one or more computer readable storage media having computer readable program code collectively stored on the one or more computer readable storage media, the computer readable program code being executed by one or more processors of a threat management computer system to cause the threat management computer system to perform a method of responding to a threat with host isolation. The method includes receiving, by the one or more processors of the threat management computer system, endpoint health information for a plurality of endpoints of a monitored network system managed by the threat management computer system. The method includes identifying, by the one or more processors of the threat management computer system, a threat associated with the monitored network system. Still further, the method includes identifying, by the one or more processors of the threat management computer system, a known device identifier or user identification associated with an endpoint of the plurality of endpoints that is responsible for the threat. Moreover, the method includes propagating, by the one or more processors of the threat management computer system, a global isolation of the endpoint across network devices of the monitored network system. The global isolation is configured to block the device identifier or user identification associated with the endpoint that is responsible for the threat.

In another embodiment of the computer program product, the method includes identifying, by the one or more processors of the threat management computer system, the known device identifier associated with the endpoint of the plurality of endpoints that is responsible for the threat, and propagating, by the one or more processors of the threat management computer system, the global isolation of the endpoint across network devices of the monitored network management system, wherein the global isolation is configured to block the device identifier associated with the endpoint that is responsible for the threat.

In another embodiment of the computer program product, the device identifier includes a media access control (MAC) address, and the propagating the global isolation of the endpoint across network devices of the monitored network system further includes: blocking, by the one or more processors of the threat management computer system, the device identifier by a MAC filter at a VLAN level, a LAN level and/or a port level of one or more switches of the monitored network system.

In a further embodiment of the computer program product, the propagating the global isolation of the endpoint across network devices of the monitored network system further includes: blocking, by the one or more processors of the threat management computer system, the device identifier at a service set identifier (SSID) level of one or more Wi-Fi access points of the monitored network system.

In yet another embodiment of the computer program product, the propagating the global isolation of the endpoint across network devices of the monitored network management system further includes: sending, by the one or more processors of the threat management computer system, a notification to a software agent of each switch or Wi-Fi access point within the monitored network system, wherein the notification causes the software agents of the switches or Wi-Fi access points to pull a configuration change corresponding to a device identifier filter and apply the configuration change on the switch or Wi-Fi access point.

In yet another embodiment of the computer program product, the propagating the global isolation of the endpoint across network devices of the monitored network management system further includes: receiving, by the one or more processors of the threat management computer system, a report of success or failure from one or more of the software agents.

In yet another embodiment of the computer program product, the propagating the global isolation of the endpoint across network devices of the monitored network management system further includes verifying, by the one or more processors of the threat management computer system, the status of whether the software agents of each of the switches or access points within the monitored network system successfully applied the device identifier to block the device identifier.

In yet a further embodiment of the computer program product, the method further includes alerting, by the one or more processors of the threat management computer system, a network administrator of the monitored network system of the identified threat and the identified known device identifier or user identification associated with the threat, and receiving, by the one or more processors of the threat management computer system, approval from the network administrator to propagate the isolation of the endpoint that is responsible for the threat before the propagating.

In another embodiment of the computer program product, the one or more processors of the threat management computer system is a cloud-based system includes a managed detection and response (MDR) service in communication with a data lake, the data lake is configured to receive and store activity information associated with the plurality of endpoints of the monitored network system, and the MDR service is configured to facilitate the identifying the threat associated with the monitored network system based on the activity information received and stored in the data lake.

In another embodiment of the computer program product, the propagating the global isolation of the endpoint across network devices of the monitored network system further includes initiating, by the one or more processors of the threat management computer system, a request to the network devices of the monitored network system to block the device identifier or user identification associated with the endpoint that is responsible for the threat; and verifying, by a gateway in communication with the threat management computer system, authenticity of the request before forwarding the request to network devices of the monitored network system.

It will be appreciated that the modules, processes, systems, and sections described above may be implemented in hardware, hardware programmed by software, software instructions stored on a nontransitory computer readable medium or a combination of the above. A system as described above, for example, may include a processor configured to execute a sequence of programmed instructions stored on a nontransitory computer readable medium. For example, the processor may include, but not be limited to, a personal computer or workstation or other such computing system that includes a processor, microprocessor, microcontroller device, or is comprised of control logic including integrated circuits such as, for example, an Application Specific Integrated Circuit (ASIC). The instructions may be compiled from source code instructions provided in accordance with a programming language such as Java, C, C++, C#.net, assembly or the like. The instructions may also comprise code and data objects provided in accordance with, for example, the Visual Basic^{™} language, or another structured or object-oriented programming language. The sequence of programmed instructions, or programmable logic device configuration software, and data associated therewith may be stored in a nontransitory computer-readable medium such as a computer memory or storage device which may be any suitable memory apparatus, such as, but not limited to ROM, PROM, EEPROM, RAM, flash memory, disk drive and the like.

Furthermore, the modules, processes systems, and sections may be implemented as a single processor or as a distributed processor. Further, it should be appreciated that the steps mentioned above may be performed on a single or distributed processor (single and/or multi-core, or cloud computing system). Also, the processes, system components, modules, and sub-modules described in the various figures of and for embodiments above may be distributed across multiple computers or systems or may be co-located in a single processor or system. Example structural embodiment alternatives suitable for implementing the modules, sections, systems, means, or processes described herein are provided below.

The modules, processors or systems described above may be implemented as a programmed general purpose computer, an electronic device programmed with microcode, a hard-wired analog logic circuit, software stored on a computer-readable medium or signal, an optical computing device, a networked system of electronic and/or optical devices, a special purpose computing device, an integrated circuit device, a semiconductor chip, and/or a software module or object stored on a computer-readable medium or signal, for example.

Embodiments of the method and system (or their sub-components or modules), may be implemented on a general-purpose computer, a special-purpose computer, a programmed microprocessor or microcontroller and peripheral integrated circuit element, an ASIC or other integrated circuit, a digital signal processor, a hardwired electronic or logic circuit such as a discrete element circuit, a programmed logic circuit such as a PLD, PLA, FPGA, PAL, or the like. In general, any processor capable of implementing the functions or steps described herein may be used to implement embodiments of the method, system, or a computer program product (software program stored on a nontransitory computer readable medium).

Furthermore, embodiments of the disclosed method, system, and computer program product (or software instructions stored on a nontransitory computer readable medium) may be readily implemented, fully or partially, in software using, for example, object or object-oriented software development environments that provide portable source code that may be used on a variety of computer platforms. Alternatively, embodiments of the disclosed method, system, and computer program product may be implemented partially or fully in hardware using, for example, standard logic circuits or a VLSI design. Other hardware or software may be used to implement embodiments depending on the speed and/or efficiency requirements of the systems, the particular function, and/or particular software or hardware system, microprocessor, or microcomputer being utilized. Embodiments of the method, system, and computer program product may be implemented in hardware and/or software using any known or later developed systems or structures, devices and/or software by those of ordinary skill in the applicable art from the function description provided herein and with a general basic knowledge of the software engineering and computer networking arts.

Moreover, embodiments of the disclosed method, system, and computer readable media (or computer program product) may be implemented in software executed on a programmed general purpose computer, a special purpose computer, a microprocessor, a network server or switch, or the like.

While the disclosed subject matter has been described in conjunction with a number of embodiments, it is evident that many alternatives, modifications and variations would be, or are, apparent to those of ordinary skill in the applicable arts. Accordingly, Applicants intend to embrace all such alternatives, modifications, equivalents and variations that are within the spirit and scope of the disclosed subject matter. It should also be understood that references to items in the singular should be understood to include items in the plural, and vice versa, unless explicitly stated otherwise or clear from the context. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth.

### NUMBERED STATEMENTS OF INVENTION

1. A method for responding to a threat with host isolation comprising:
   receiving, by one or more processors of a threat management computer system, endpoint health information for a plurality of endpoints of a monitored network system managed by the threat management computer system;
   identifying, by the one or more processors of the threat management computer system, a threat associated with the monitored network system;
   identifying, by the one or more processors of the threat management computer system, a known device identifier or user identification associated with an endpoint of the plurality of endpoints that is responsible for the threat;
   propagating, by the one or more processors of the threat management computer system, a global isolation of the endpoint across network devices of the monitored network system, wherein the global isolation is configured to block the device identifier or user identification associated with the endpoint that is responsible for the threat.
2. The method of statement 1, further comprising:
   identifying, by the one or more processors of the threat management computer system, the known device identifier associated with the endpoint of the plurality of endpoints that is responsible for the threat; and
   propagating, by the one or more processors of the threat management computer system, the global isolation of the endpoint across network devices of the monitored network management system, wherein the global isolation is configured to block the device identifier associated with the endpoint that is responsible for the threat.
3. The method of statement 2, wherein:
   the device identifier comprises a media access control (MAC) address; and
   the propagating the global isolation of the endpoint across network devices of the monitored network system further comprises:
      blocking, by the one or more processors of the threat management computer system, the device identifier by a MAC filter at a VLAN level, a LAN level and/or a port level of one or more switches of the monitored network system.
4. The method of statement 2 or 3, wherein the propagating the global isolation of the endpoint across network devices of the monitored network system further comprises:
   blocking, by the one or more processors of the threat management computer system, the device identifier at a service set identifier (SSID) level of one or more Wi-Fi access points of the monitored network system.
5. The method of any preceding statement, wherein the propagating the global isolation of the endpoint across network devices of the monitored network management system further comprises:
   sending, by the one or more processors of the threat management computer system, a notification to a software agent of each switch or Wi-Fi access point within the monitored network system, wherein the notification causes the software agents of the switches or Wi-Fi access points to pull a configuration change corresponding to a device identifier filter and apply the configuration change on the switch or Wi-Fi access point.
6. The method of statement 5, wherein the propagating the global isolation of the endpoint across network devices of the monitored network management system further comprises:
   receiving, by the one or more processors of the threat management computer system, a report of success or failure from one or more of the software agents.
7. The method of statement 6, wherein the propagating the global isolation of the endpoint across network devices of the monitored network management system further comprises:
   verifying, by the one or more processors of the threat management computer system, the status of whether the software agents of each of the switches or access points within the monitored network system successfully applied the device identifier to block the device identifier.
8. The method of any preceding statement, further comprising:
   alerting, by the one or more processors of the threat management computer system, a network administrator of the monitored network system of the identified threat and the identified known device identifier or user identification associated with the threat; and
   receiving, by the one or more processors of the threat management computer system, approval from the network administrator to propagate the isolation of the endpoint that is responsible for the threat before the propagating.
9. The method of any preceding statement, wherein:
   the one or more processors of the threat management computer system is a cloud-based system includes a managed detection and response (MDR) service in communication with a data lake,
   the data lake is configured to receive and store activity information associated with the plurality of endpoints of the monitored network system, and
   the MDR service is configured to facilitate the identifying the threat associated with the monitored network system based on the activity information received and stored in the data lake.
10. The method of any preceding statement, wherein the propagating the global isolation of the endpoint across network devices of the monitored network system further comprises:
   initiating, by the one or more processors of the threat management computer system, a request to the network devices of the monitored network system to block the device identifier or user identification associated with the endpoint that is responsible for the threat; and verifying, by a gateway in communication with the threat management computer system, authenticity of the request before forwarding the request to network devices of the monitored network system.
11. A threat management computer system, comprising:
   one or more processors;
   one or more computer readable storage media; and
   computer readable code stored collectively in the one or more computer readable storage media, with the computer readable code including data and instructions to cause the one or more computer processors to perform a method for responding to a threat with host isolation comprising:
      receiving, by the one or more processors, endpoint health information for a plurality of endpoints of a monitored network system managed by the threat management computer system;
      identifying, by the one or more processors, a threat associated with the monitored network system;
      identifying, by the one or more processors, a known device identifier or user identification associated with an endpoint of the plurality of endpoints that is responsible for the threat;
      propagating, by the one or more processors, a global isolation of the endpoint across network devices of the monitored network system, wherein the global isolation is configured to block the device identifier or user identification associated with the endpoint that is responsible for the threat.
12. The threat management computer system of statement 11, the method further comprising:
   identifying, by the one or more processors of the threat management computer system, the known device identifier associated with the endpoint of the plurality of endpoints that is responsible for the threat; and
   propagating, by the one or more processors of the threat management computer system, the global isolation of the endpoint across network devices of the monitored network management system, wherein the global isolation is configured to block the device identifier associated with the endpoint that is responsible for the threat.
13. The computer system of statement 12, wherein:
   the device identifier comprises a media access control (MAC) address; and
   the propagating the global isolation of the endpoint across network devices of the monitored network system further comprises:
      blocking, by the one or more processors of the threat management computer system, the device identifier by a MAC filter at a VLAN level, a LAN level and/or a port level of one or more switches of the monitored network system.
14. The computer system of statement 12 or 13, wherein the propagating the global isolation of the endpoint across network devices of the monitored network system further comprises:
   blocking, by the one or more processors of the threat management computer system, the device identifier at a service set identifier (SSID) level of one or more Wi-Fi access points of the monitored network system.
15. The computer system of any of statements 12 to14, wherein the propagating the global isolation of the endpoint across network devices of the monitored network management system further comprises:
   sending, by the one or more processors of the threat management computer system, a notification to a software agent of each switch or Wi-Fi access point within the monitored network system, wherein the notification causes the software agents of the switches or Wi-Fi access points to pull a configuration change corresponding to a device identifier filter and apply the configuration change on the switch or Wi-Fi access point.
16. The computer system of statement 15, wherein the propagating the global isolation of the endpoint across network devices of the monitored network management system further comprises:
   receiving, by the one or more processors of the threat management computer system, a report of success or failure from one or more of the software agents.
17. The computer system of statement 16, wherein the propagating the global isolation of the endpoint across network devices of the monitored network management system further comprises:
   verifying, by the one or more processors of the threat management computer system, the status of whether the software agents of each of the switches or access points within the monitored network system successfully applied the device identifier to block the device identifier.
18. The computer system of any of statements 11 to 17, the method further comprising:
   alerting, by the one or more processors of the threat management computer system, a network administrator of the monitored network system of the identified threat and the identified known device identifier or user identification associated with the threat; and
   receiving, by the one or more processors of the threat management computer system, approval from the network administrator to propagate the isolation of the endpoint that is responsible for the threat before the propagating.
19. The computer system of any of statements 11 to 18, wherein
   the one or more processors of the threat management computer system is a cloud-based system includes a managed detection and response (MDR) service in communication with a data lake,
   the data lake is configured to receive and store activity information associated with the plurality of endpoints of the monitored network system, and
   the MDR service is configured to facilitate the identifying the threat associated with the monitored network system based on the activity information received and stored in the data lake.
20. The computer system of any of statements **11** to 19, wherein the propagating the global isolation of the endpoint across network devices of the monitored network system further comprises:
   initiating, by the one or more processors of the threat management computer system, a request to the network devices of the monitored network system to block the device identifier or user identification associated with the endpoint that is responsible for the threat; and
   verifying, by a gateway in communication with the threat management computer system, authenticity of the request before forwarding the request to network devices of the monitored network system.
21. A computer program product comprising:
   one or more computer readable storage media having computer readable program code collectively stored on the one or more computer readable storage media, the computer readable program code being executed by one or more processors of a threat management computer system to cause the threat management computer system to perform a method for responding to a threat with host isolation comprising:
   receiving, by the one or more processors of the threat management computer system, endpoint health information for a plurality of endpoints of a monitored network system managed by the threat management computer system;
   identifying, by the one or more processors of the threat management computer system, a threat associated with the monitored network system;
   identifying, by the one or more processors of the threat management computer system, a known device identifier or user identification associated with an endpoint of the plurality of endpoints that is responsible for the threat;
   propagating, by the one or more processors of the threat management computer system, a global isolation of the endpoint across network devices of the monitored network system, wherein the global isolation is configured to block the device identifier or user identification associated with the endpoint that is responsible for the threat.

## Claims

1. A method for responding to a threat with host isolation comprising:
receiving, by one or more processors of a threat management computer system, endpoint health information for a plurality of endpoints of a monitored network system managed by the threat management computer system;
identifying, by the one or more processors of the threat management computer system, a threat associated with the monitored network system;
identifying, by the one or more processors of the threat management computer system, a known device identifier or user identification associated with an endpoint of the plurality of endpoints that is responsible for the threat;
propagating, by the one or more processors of the threat management computer system, a global isolation of the endpoint across network devices of the monitored network system, wherein the global isolation is configured to block the device identifier or user identification associated with the endpoint that is responsible for the threat.

2. The method of claim 1, further comprising:
identifying, by the one or more processors of the threat management computer system, the known device identifier associated with the endpoint of the plurality of endpoints that is responsible for the threat; and
propagating, by the one or more processors of the threat management computer system, the global isolation of the endpoint across network devices of the monitored network management system, wherein the global isolation is configured to block the device identifier associated with the endpoint that is responsible for the threat.

3. The method of claim 2, wherein:
the device identifier comprises a media access control (MAC) address; and
the propagating the global isolation of the endpoint across network devices of the monitored network system further comprises:
blocking, by the one or more processors of the threat management computer system, the device identifier by a MAC filter at a VLAN level, a LAN level and/or a port level of one or more switches of the monitored network system.

4. The method of claim 2 or 3, wherein the propagating the global isolation of the endpoint across network devices of the monitored network system further comprises:
blocking, by the one or more processors of the threat management computer system, the device identifier at a service set identifier (SSID) level of one or more Wi-Fi access points of the monitored network system.

5. The method of any of claims 2 to 4, wherein the propagating the global isolation of the endpoint across network devices of the monitored network management system further comprises:
sending, by the one or more processors of the threat management computer system, a notification to a software agent of each switch or Wi-Fi access point within the monitored network system, wherein the notification causes the software agents of the switches or Wi-Fi access points to pull a configuration change corresponding to a device identifier filter and apply the configuration change on the switch or Wi-Fi access point.

6. The method of claim 5, wherein the propagating the global isolation of the endpoint across network devices of the monitored network management system further comprises:
receiving, by the one or more processors of the threat management computer system, a report of success or failure from one or more of the software agents.

7. The method of claim 6, wherein the propagating the global isolation of the endpoint across network devices of the monitored network management system further comprises:
verifying, by the one or more processors of the threat management computer system, the status of whether the software agents of each of the switches or access points within the monitored network system successfully applied the device identifier to block the device identifier.

8. The method of any preceding claim, further comprising:
alerting, by the one or more processors of the threat management computer system, a network administrator of the monitored network system of the identified threat and the identified known device identifier or user identification associated with the threat; and
receiving, by the one or more processors of the threat management computer system, approval from the network administrator to propagate the isolation of the endpoint that is responsible for the threat before the propagating.

9. The method of any preceding claim, wherein:
the one or more processors of the threat management computer system is a cloud-based system includes a managed detection and response (MDR) service in communication with a data lake,
the data lake is configured to receive and store activity information associated with the plurality of endpoints of the monitored network system, and
the MDR service is configured to facilitate the identifying the threat associated with the monitored network system based on the activity information received and stored in the data lake.

10. The method of any preceding claim, wherein the propagating the global isolation of the endpoint across network devices of the monitored network system further comprises:
initiating, by the one or more processors of the threat management computer system, a request to the network devices of the monitored network system to block the device identifier or user identification associated with the endpoint that is responsible for the threat; and
verifying, by a gateway in communication with the threat management computer system, authenticity of the request before forwarding the request to network devices of the monitored network system.

11. A threat management computer system, comprising:
one or more processors;
one or more computer readable storage media; and
computer readable code stored collectively in the one or more computer readable storage media, with the computer readable code including data and instructions to cause the one or more computer processors to perform the method of any of claims 1 to 10

12. A computer program product comprising:
one or more computer readable storage media having computer readable program code collectively stored on the one or more computer readable storage media, the computer readable program code being executed by one or more processors of a threat management computer system to cause the threat management computer system to perform a method for responding to a threat with host isolation comprising:
receiving, by the one or more processors of the threat management computer system, endpoint health information for a plurality of endpoints of a monitored network system managed by the threat management computer system;
identifying, by the one or more processors of the threat management computer system, a threat associated with the monitored network system;
identifying, by the one or more processors of the threat management computer system, a known device identifier or user identification associated with an endpoint of the plurality of endpoints that is responsible for the threat;
propagating, by the one or more processors of the threat management computer system, a global isolation of the endpoint across network devices of the monitored network system, wherein the global isolation is configured to block the device identifier or user identification associated with the endpoint that is responsible for the threat.
